# EUROPEAN PATENT SPECIFICATION

(11) **EP 3 744 928 B1**
(45) Date of publication and mention of the grant of the patent: **14.09.2022**
(21) Application number: 19305666.0
(22) Date of filing: 27.05.2019
(51) Int. Cl.: E04H 12/12, E04H 12/34, F03D 13/20

(54) **WIND TURBINE TOWER AND METHOD OF FABRICATION AND ASSEMBLING**
WINDTURBINENTURM UND VERFAHREN ZUR HERSTELLUNG UND MONTAGE
TOUR D'ÉOLIENNE ET PROCÉDÉ DE FABRICATION ET D'ASSEMBLAGE

(43) Date of publication of application: 02.12.2020
(73) Proprietor: Soletanche Freyssinet, 92500 Rueil-Malmaison (FR)
(72) Inventor: LEBON, Jean-Daniel, 78100 Saint Germain en Laye (FR); LAURENT, Eric, 91790 BOISSY SOUS SAINT YON (FR)
(74) Representative: Nony

(56) References cited:
- EP-A2- 2 749 386
- WO-A1-2013/022341
- WO-A1-2017/046624
- CN-U- 207 297 238
- DE-A1-102011 011 414
- KR-B1- 101 677 673
- US-A1- 2016 348 391

## Description

The present invention relates to towers for holding wind turbines, and more particularly but not exclusively to onshore wind turbine towers.

It has been proposed to make wind turbine towers in precast concrete elements, that are transported to the site where the tower is to be elevated, and assembled there.

So far, these elements are cumbersome, which necessitates special transportation vehicles.

US 8 505 244 discloses a tower made of assembled annular segments, each made of a plurality of sectors.

The sectors are assembled by mortar or via flanges having openings through which metallic bars pass.

The openings are larger than the bars and the play, together with manufacturing tolerances, may result in difficulties for assembling the sectors with the required precision.

US 8 950 149 discloses a polygonal concrete structure such as a wind turbine tower, made of precast concrete elements.

KR101677673 discloses a structure made of precast concrete elements.

CN207297238U discloses a tower made of precast concrete elements.

There exists a need for a wind turbine tower that can be easily manufactured and assembled, and that overcomes at least some of the drawbacks of the prior art, relating to transportation of the elements inter alia.

Exemplary embodiments of the invention relate to a wind turbine tower comprising a plurality of annular segments axially aligned with each other, at least one of the annular segments comprising a plurality of assembled sectors made of precast concrete, adjacent sectors of this segment being assembled by clamping devices, preferably bolting systems, and the segment comprising at the interface of adjacent sectors shear keys cast with the sectors.

The shear keys contribute to the transmission of vertical forces between the sectors.

Thanks to the invention, the tower can be made of a relatively high number of sectors, easy to manufacture and assemble, with the required mechanical resistance and precision of assembly. The sectors can be made of a size easy to transport with conventional vehicles, and the cost of transportation is reduced. Each sector preferably has a height and a width less than 4.5m (height) and 8m (width) respectively.

The tower may comprise more than half of its segments that are made with such sectors provided with shear keys. All sectors of the tower may comprise shear keys.

The total height of the tower (without the wind turbine) may exceed 100 m.

The external diameter of the tower may range from 4 m to 15 m.

The number of segments of the tower may range from 20 to 150.

The number of sectors per segment may range from 2 to 10.

The tower may comprise a first section made of segments having a given number ni of sectors per segment and a second portion made of segments having a different number n₂ of sectors per segment. These two sections may be made of segments having different external diameters. The smaller diameter segments may have a smaller number of sectors than the larger diameter segments.

Most segments may be of cylindrical shape, but some segments may be of frustoconical shape. These frustoconical segments may be used at the transition from two sections of the tower made of segments having different diameters.

The recesses for accommodating the shear keys open out onto the intrados of the sectors. This makes the assembly of the sectors easy, as the sectors only need to be inserted with a radial movement between sectors already in place. These recessed may be closed at the other radial end and as such do not open onto the extrados of the sectors. This helps give the tower a smooth external surface. The number of shear keys on a same lateral end face of a sector may range from 1 to 10. Preferably, the lateral end face has three shear keys, two of them being close to a respective axial end face of the sector, and the third one being substantially at mid-height.

Each shear key may have a greatest dimension less than 400 cm. The thickness of the shear key, i.e. the maximum distance by which it protrudes out of the corresponding lateral end face of the sector, may range from 1 to 20 cm.

Each lateral end face or axial end face of a sector may be planar, except for the corresponding shear keys or recesses used for interlocking with an adjacent sector and/or for receiving centering pins or components of a bolting system.

Each sector may comprise axial ribs protruding inwardly adjacent the end faces of the sector, the ribs preferably having a triangular cross section. These ribs help concrete to flow and promote evacuation of bubbles that may otherwise remain at the lateral end faces of the segments during the casting operation. These ribs face upwards when the segment is cast. The clamping devices may comprise bolts that extend through a corresponding rib, preferably at its base. The bolts preferably extend each in a horizontal plane.

The sectors preferably comprise sockets for receiving bolts of the clamping devices, the sockets being advantageously integrated into the sector during casting thereof.

Each sector may comprise at least one axial bore extending from each axial end of the sector along at least part of the height of the sector. At least one of the bores preferably opens out in a recess formed on the internal surface of the sector. These bores serve to introduce bars extending between two consecutive segments and help fastening the segments one to another.

Some of the sectors of at least one segment preferably comprise holes opening out on the external surface (extrados) of the segment, for hoisting a section of the tower and/or for anchoring of a self-elevating machine used for erecting the tower.

Preferably, centering pins are engaged between sectors of two adjacent segments. These centering pins are preferably biconical. These pins help to position precisely the segments on top of each other and may also contribute to transmit horizontal shear forces between the segments.

The invention also relates to a method for the production of sectors of a tower, as defined above, comprising transferring at least one mold between different workstations, including:
- A workstation where the mold is open,
- a workstation where a cast sector is extracted from the mold,
- a workstation where the mold is cleaned,
- a workstation where rebar is positioned in the mold,
- a workstation where the mold is closed,
- a workstation where concrete is injected in the mold, and
- a workstation where concrete is let set in the mold.

Such a method is different from the prior art where the formworks used for casting the tower elements are static. The method according to the invention offers a higher productivity, which makes up for the larger number of sectors to make due to their smaller dimensions.

The method preferably involves a plurality of molds that are moved along the different workstations, preferably in a closed loop.

One or more than one mold can be processed at each workstation.

Preferably, each mold is machined so as to provide manufacture tolerances not greater than 5 mm, better 3mm, even better 1mm or 0,5 mm, on faces of a sector intended to contact other sectors. A high precision of manufacture of the sectors results in an easier assembling of the sectors and the segments, and it allows to have dry joints between the sectors and the segments.

The mold preferably has a surface that is oriented upwards and that is configured for casting the extrados of the sector, so that the extrados of the sector faces downward when the sector is cast.

The number of sectors made every day by such a method in a same production line may exceed 200.

The invention also relates to a method for constructing a tower, as defined above, comprising transporting sectors from a plant where the sectors are made to a construction site for the tower, the transportation being performed with low bed or regular trucks and more than one sector per truck, assembling the sectors to form the segments, and then assembling the segments.

The sectors of a segment are advantageously assembled on a rotating platform.

Each sector may be carried during assembly by an end of a manipulating arm of a wheeled truck, without hoisting. However, hoisting is also possible.

A coating of a polymeric binder (e.g. an epoxy resin) may be applied on the shear keys before the sectors are assembled, to lubricate the interface and improve transmission of forces.

The rotating platform preferably comprises tracks for transfer of a complete segment out of the platform, jacks for lifting the segment to position thereunder transportation members, and at least one arm to hold a first sector on the platform while awaiting other sectors to be assembled thereon. The platform may be rotated by 360/n, where n is the number of sectors in the segment, after each sector is assembled, until the before last one. The transportation members may be rollers and/or sliding pads made of PTFE or similar low friction material.

The invention also relates to a sector made in accordance with the invention and to a plant for performing the method as defined above, as well as to a rotatable platform for assembling the sectors.

This platform preferably comprises a fixed base and a rotatable table. The latter may comprise a circular track, and at least one arm extending radially for positioning a sector before its assembly to other sectors placed subsequently on the table. The table may comprise parallel beams that form a track for discharging the assembled segment from the table. This track may be aligned by rotating the platform with an external track serving to transport the segments to a hoisting or other equipment used for assembling the segments.

Further features and advantages of the invention will become apparent on reading the detailed description that follows, and in view of the accompanying drawing, in which:
- Figure 1 is a perspective view of an example of wind turbine tower made in accordance with the invention,
- Figure 2 shows the tower of Figure 1 in elevation,
- Figure 3 is a top view of the tower according to arrow III of Figure 2,
- Figure 4 shows the top end element of the tower, for fixing thereto the wind turbine,
- Figure 5 shows a three sectors segment,
- Figure 6 illustrates the locking of one sector with respect to the other sectors,
- Figure 7 shows a detail of the interface between sectors,
- Figure 8 shows two adjacent sectors before bolting,
- Figure 9 shows one sector in elevation,
- Figure 10 shows one sector in perspective,
- Figure 11 shows detail XI of Figure 10,
- Figure 12 shows detail XII of Figure 10,
- Figure 13 shows the sector of Figure 9 in its casting configuration,
- Figure 14 shows a variant of a sector,
- Figure 15 is a section across XV-XV of Figure 14,
- Figure 16 shows the sector of Figure 14 in its casting configuration,
- Figure 17 shows another variant of a sector,
- Figure 18 is a schematic view of a plant for producing the sectors,
- Figure 19 is a schematic view of a platform for assembling the sectors,
- Figure 20 is a perspective view of the platform,
- Figure 21 is a top view of the platform,
- Figure 22 shows in isolation a clamping device.
- Figure 23 shows a centering pin and a corresponding recess in axial end face of a sector,
- Figure 24 is a perspective view showing in transparency internal recesses of an example of a sector, and
- Figure 25 is a view similar to Figure 24 of another example of a sector.

### Detailed description

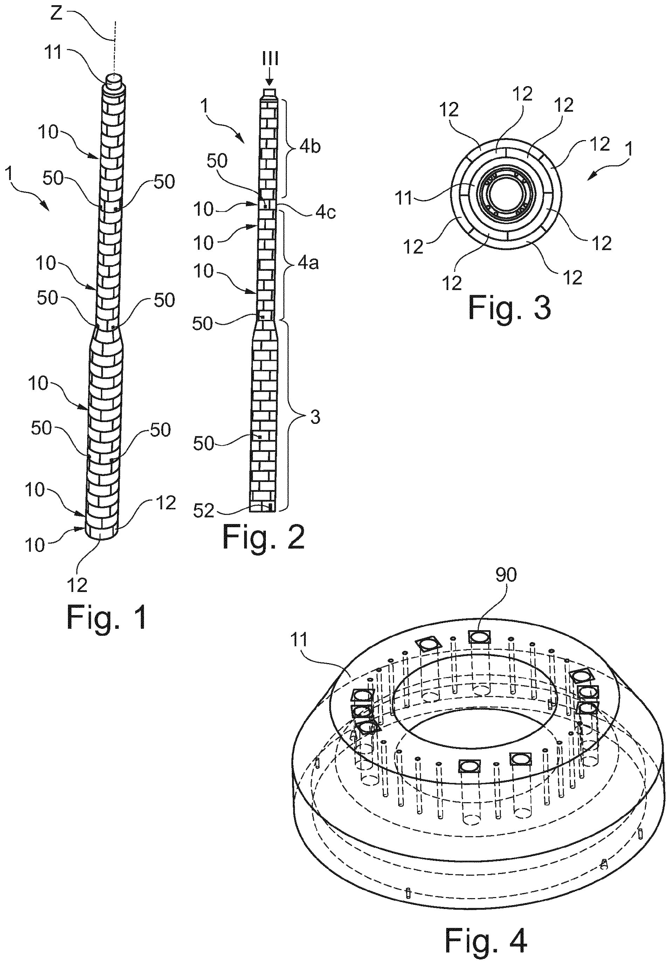

Figures 1 and 2 shows a wind turbine tower 1 made in accordance with the present invention.

The tower 1 comprises a plurality of segments 10 that are assembled vertically along the longitudinal axis Z of the tower.

The wind turbine (not shown) is affixed on top the tower 1 thanks to an end element 11 shown in isolation in Figure 4.

Each segment 10 is ring shaped and composed of sectors 12, that are preferably arc-shaped, as shown.

The number of sectors 12 per segment 10 may vary according to the position of the segment along the tower 1.

In the illustrated embodiment, the tower 1 comprises a lower portion 3 starting from the bottom of the tower, made of four sector segments, then a higher portion composed of two sections 4a and 4b made of three sector segments, the two sections 4a and 4b being separated at 4c by an intermediate four sector segment 10.

The lower section 3 may be constituted mainly of cylindrical segments 10 and may comprise as shown a top portion made of at least one frustoconical segment, to reduce the external diameter of the tower to that of the section 4a.

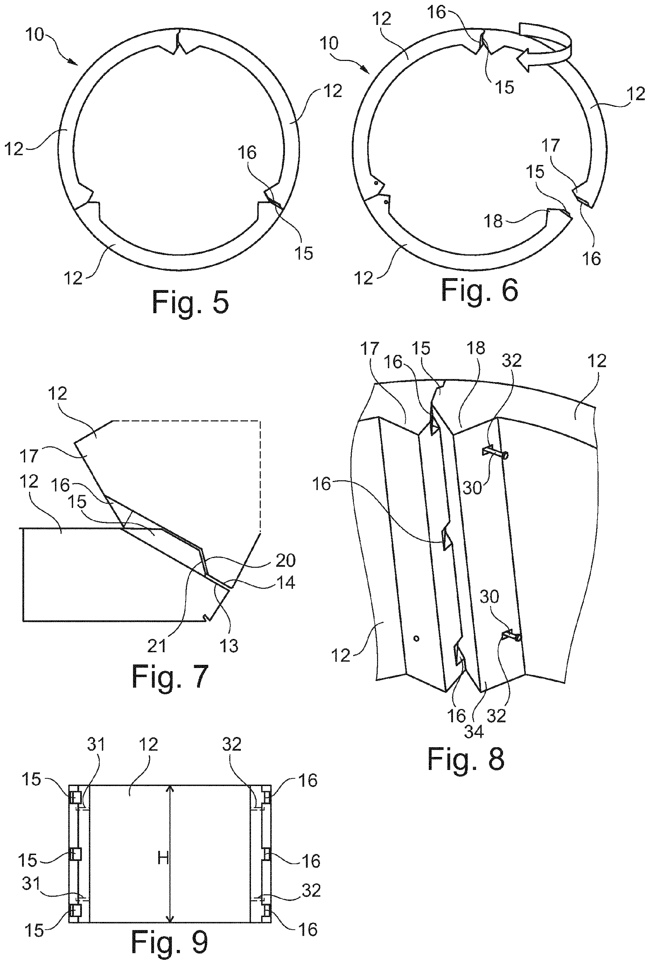

Figures 5 to 13 show one of the three sector segments 10.

Each sector 12 is made of reinforced concrete and has lateral end faces 13 and 14 provided with shear keys 15 and corresponding recesses 16, respectively. These lateral end faces are oriented vertically in the tower.

Each sector 12 comprises bosses 17 and 18 that protrude inwardly adjacent the lateral end faces 14 and 13 respectively.

The recesses 16 open out onto the intrados of the sectors, as can be seen in Figure 7, and extend along part of the adjacent boss 17.

As shown in Figure 8, there are preferably three shear keys 15 per sector 12.

The bottom 20 of each recess 16 may be of a shape substantially complementary to that of the most radially outward end 21 of the shear key 15, as shown in Figure 7.

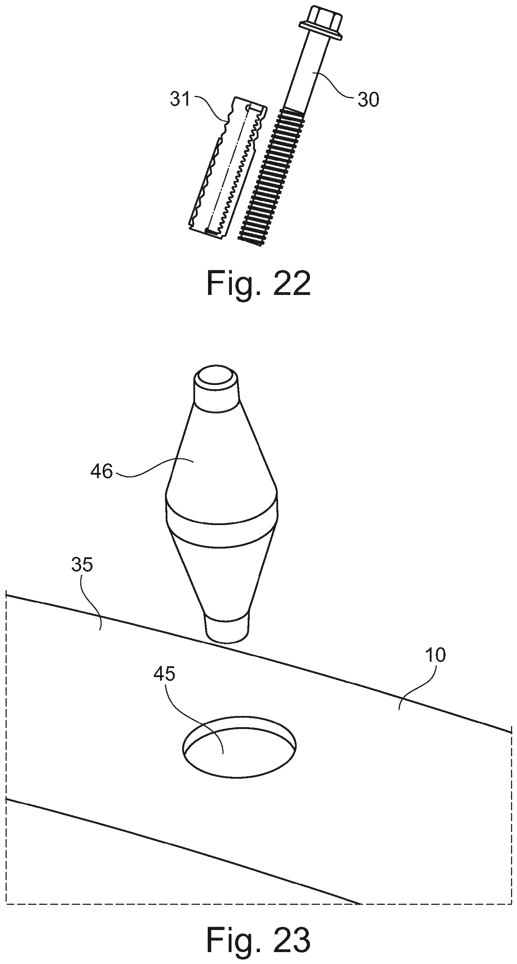

The sectors 12 are preferably assembled by clamping devices such as bolting systems that comprise as shown in Figure 22 bolts 30 and associated sockets 31, internally threaded and into which the bolts can be screwed.

The bolts 30 extend through holes 32 of the sectors 12 while the sockets 31 are integrated into the sectors 12 during casting thereof.

The holes 32 open out onto a rear face 34 of the boss 18, as shown in Figure 8.

There may be two bolting systems 30, 31 per interface between two adjacent sectors 12 of a same segment 10, as shown in Figure 8. The bolts 30 are oriented substantially horizontally in the tower 1.

The shear keys 15 and recesses 16 help position one sector relative to another one to complete a segment, as shown in Figure 6, and will be detailed further below.

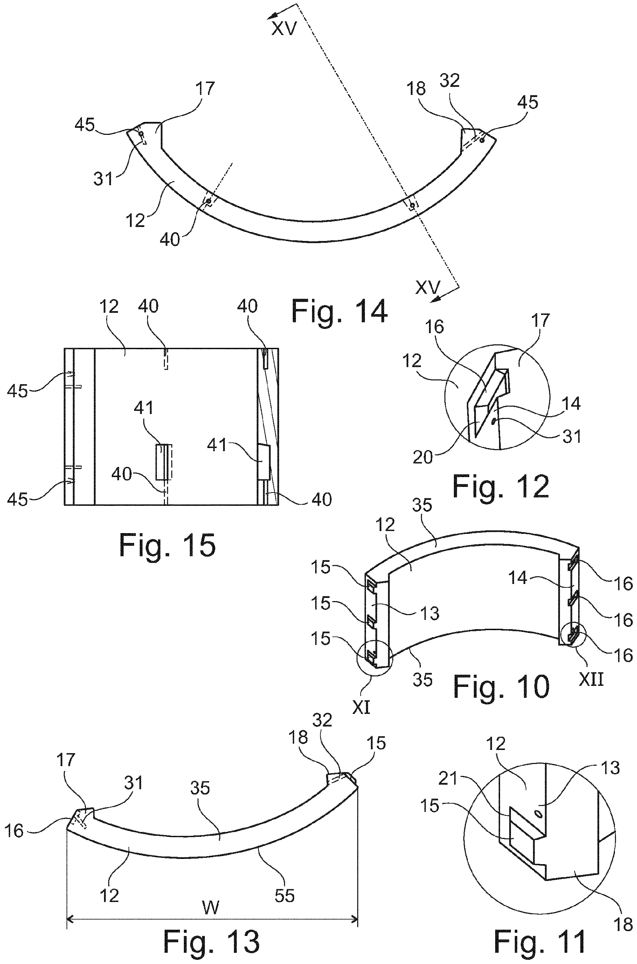

The sectors 12 may be provided with additional features, that are now described in relation to Figures 14 to 17, 24 and 25.

The shear keys 15 and corresponding recesses 16 of the sectors are not shown in Figures 14 to 17, to illustrate that not all the sectors of the tower need to exhibit these features.

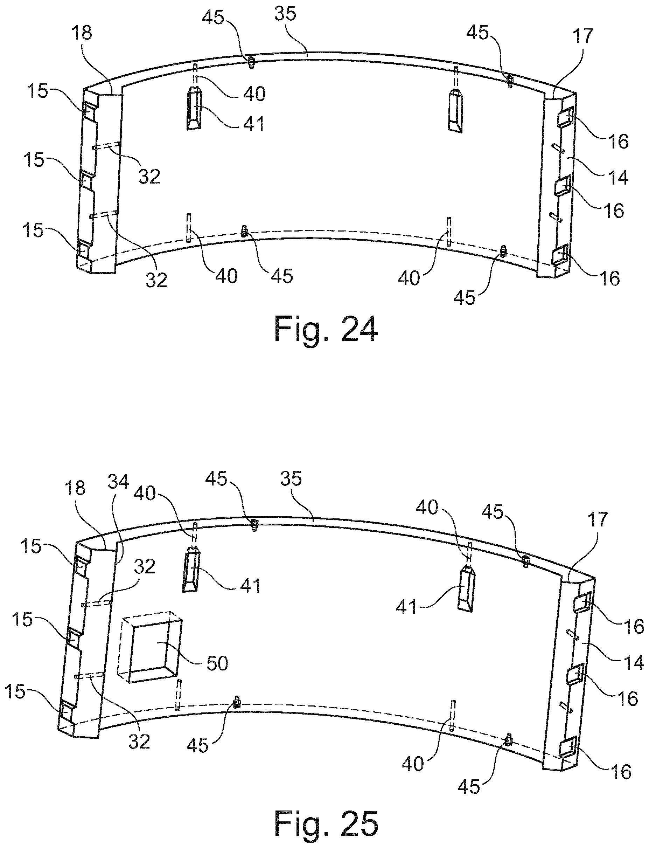

Figures 24 and 25 show examples of sectors 12 that encompass both shear keys as described with reference to Figures 5 to 13 and the additional features.

At least some of the sectors 12 may comprise axial bores 40 that open out on axial end faces 35 of the sectors 12. These axial end faces are oriented horizontally in the tower. Some recesses 41 may be formed on the intrados of the sectors 12 to provide access to an end of at least some of the bores 40, for tightening the bars.

These bores 40 serve to receive bars used to assemble adjacent segments.

The end faces of the sectors 12 may be provided with recesses 45 for receiving biconical centering pins 46 as shown in Figure 23. These recesses 45 may be present on lateral end faces as well as on axial end faces.

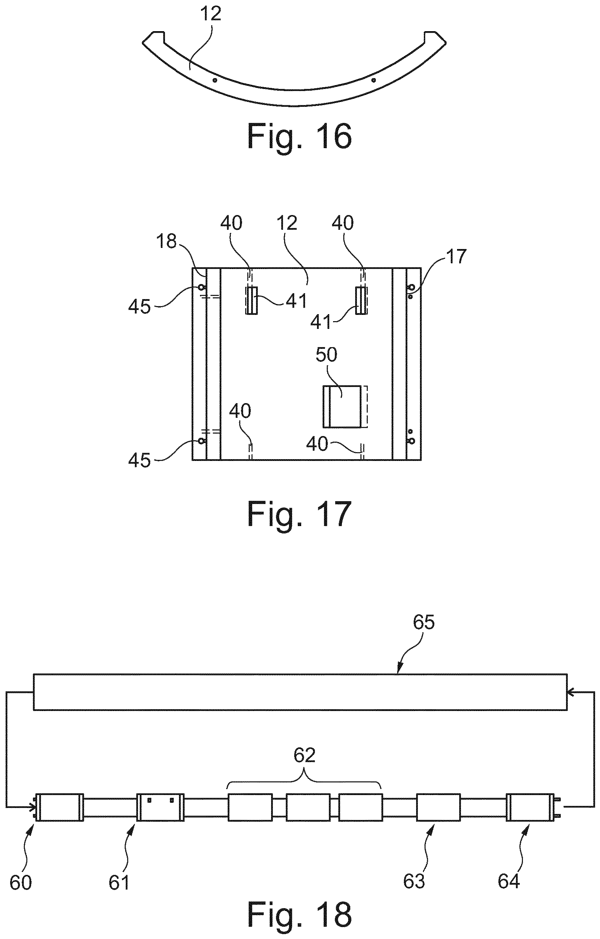

Some sectors 12 may comprise windows 50, as shown in Figure 17 and Figure 25.

These windows 50 may be used for insertion of gripping arms of a machine known per se, serving to erect the tower.

In the example shown in Figures 1 and 2, the tower 1 also comprises at its base a door opening 52, giving access to the inside of the tower 1.

The sectors 12 are of relatively small dimensions and are preferably made in a plant in molds that are moved between different workstations.

The width W of a sector 12 is preferably less than 8 m and its height H is preferably less than 4.5 m.

Each mold serving to cast a sector is preferably machined with a relatively high precision, so that the manufacturing tolerances on at least some surfaces of the sector are within a relatively low value, which is less than 5mm, better 2mm, and even better 1mm or 0,5 mm.

In particular, the manufacturing tolerances of the lateral end faces 13 and 14, and of the axial end faces 35, are better than this value.

Each sector 12 is cast is its corresponding mold with its extrados 55 facing downwards, as illustrated in Figures 13 or 16. The surface of the mold serving to mold the extrados thus constitutes the bottom of the mold. This allows to fill the mold by gravity pouring of the concrete in the mold.

A plurality of molds is used simultaneously in a production line, and the molds are displaced by any appropriate transportation means such as a carrousel from one workstation to another.

The molds are preferably transported in a closed loop between the different workstations.

The production line enables the production in continuous manner of the sectors.

The production line comprises a workstation 60, as illustrated in Figure 18, where the mold is open.

The mold once in its open state is transported to the next workstation 61, where the cast sector 12 is extracted from the mold.

The empty mold then reaches a workstation 62 where the mold is cleaned, rebar is installed in the mold, and the mold is closed.

The closed mold then is transported to the next workstation 63 where it is filled with concrete.

The mold can then be transported to a workstation 64 where it is cleaned externally, and to a workstation 65 constituting a drying stove or tunnel, where the setting of the concrete will take place.

The molds leaving the workstation 65 then reaches the workstation 60, and the process is repeated.

The sectors 12 leaving the manufacture line are transported to the assembly site, where the tower will be erected.

Due to the size of the sectors, a plurality of sectors can be transported simultaneously on a conventional flat-bed truck.

At the tower assembly site, the sectors 12 are assembled to form the segments 10.

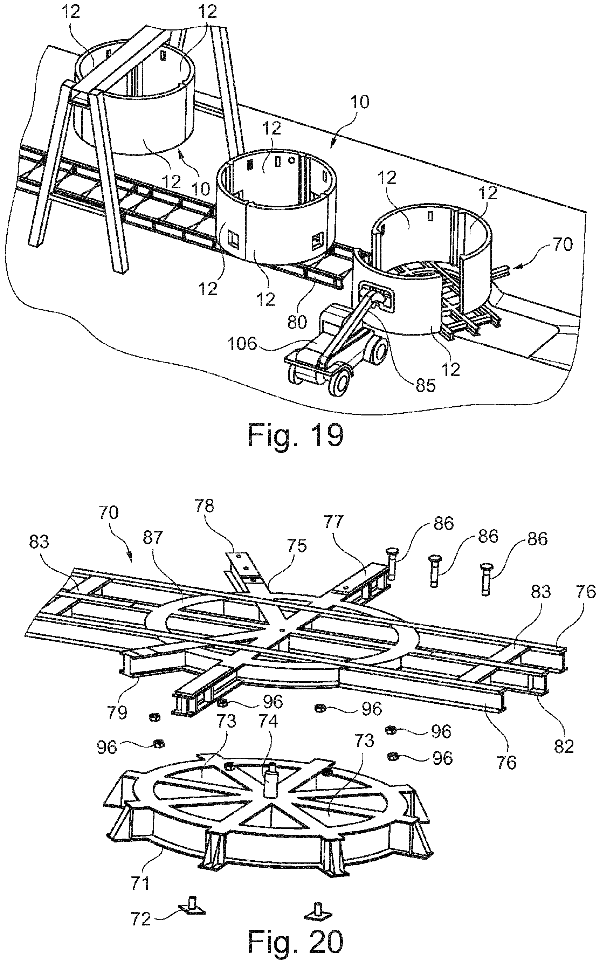

According to one aspect of the invention, a rotatable platform 70 is used to facilitate the assembling of the sectors, as illustrated in Figures 19 to 21.

The platform 70 comprises a fixed base 71, that is provided with adjustable feet 72. The base can receive ballast 73 to help stabilize it.

The base 71 comprises a vertical central shaft 74 on which an assembly table 75 is articulated.

Rolling bearings 96 are interposed between the base 71 and table 75.

The table 75 comprises a set of two parallel beams 76 which form a track that can be aligned with a track 80 external to the platform 70, allowing an assembled segment to leave the platform 70 by rolling on the beams 76 and on the track 80, without the need for hoisting equipment.

The beams 76 are connected by a circular track 87, on which the rolling bearings 96 bear.

The table 75 comprises a transverse beam 77 that extends beyond the circular track 87, and two oblique arms 78 and 79 that extend radially from the center of the table 75 beyond the circular track 87.

The beam 77 and arms 78 and 79 join at the center of the table 75.

A median beam 82 extends parallel to the beams 76, and transverse beams 83 connect the beams 76 and 82 together.

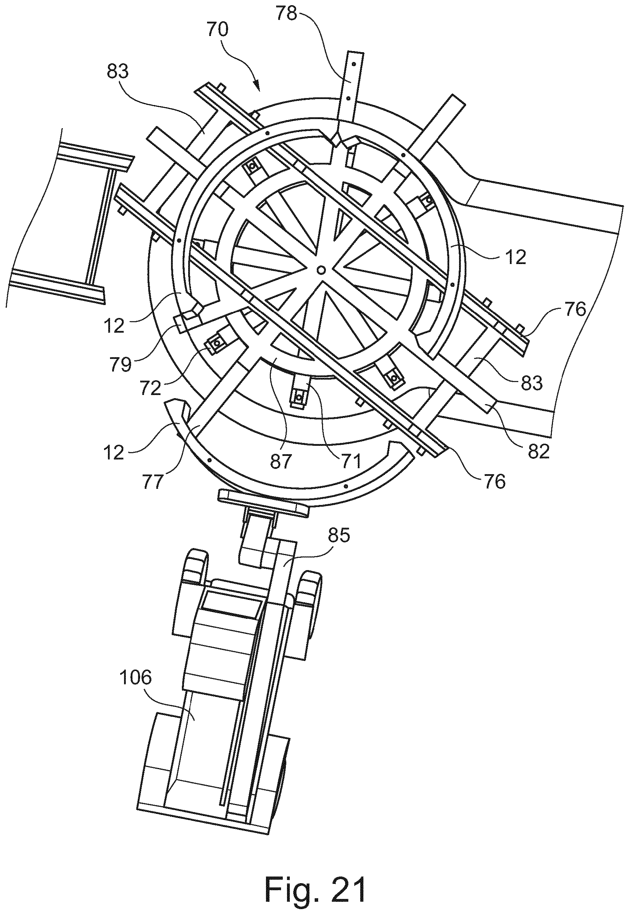

The arm 78 is longer than the arm 79, as can be seen in Figure 21.

The sectors 12 are manipulated by an articulated arm 85 of a wheeled vehicle 106 when they are installed on the table 75, as shown in Figures 19 and 21. The sectors may be introduced from a same side of the platform, and the table is rotated for the introduction of the next sector. This renders the assembling convenient.

A coating of a polymeric binder may be applied on the shear keys before the sectors 12 are assembled, to lubricate the interface and improve transmission of forces.

When all sectors 12 but one are assembled, the last sector 12 can be introduced by a radial movement, as illustrated in Figure 21.

Sectors 12 already present on the table 75 can be maintained by bars (not shown) installed on the beam 77 and arms 78 and 79, before being bolted together using the bolting systems 30, 31.

The platform 70 comprises lifting jacks 86 for lifting the sectors 12 at some height above the table 75, to allow for placement below the segment 10 of rolling members.

The segments 10 once formed are assembled to form the tower 1.

During the assembling of the segments 10, bars (not shown) may be introduced in the axial bores 40 opening out on the axial end faces 35 of the sectors 12.

Even if the axial end faces 35 may comprise conical recesses 45 into which centering pins 46 are inserted, as mentioned above, the tower is preferably constructed in such a manner that the nominal mechanical loads are withstand without the need of the additional resistance brought by the presence of these centering pins 46.

The segments 10 may be assembled by dry joint, with no concrete or resin binder inserted between two consecutive segments 10.

Preferably, as can be seen in Figures 1 and 2, the segments 10 are angularly offset so that the vertical joint between the sectors of one segment is positioned substantially at the middle of the sectors of the adjacent segments 10.

Thanks to the precision with which the sectors 12 are manufactured, there is no significant misalignment of the axial end faces 35 of the sectors 12 of a same segment 10 (i.e. the horizontal joint of a segment).

Post-tensioning tendons may be used to prestress the segments 10.

Some tendons may be used during the erection of the tower and anchored in intermediate segments.

Some other tendons may be tensioned only after the erection of the tower is completed.

These tendons may be anchored at one end in the top ring element 11 thanks to anchors 90, and at the other end in the foundation of the tower.

These tendons are preferably made of cables that extend within the internal space of the tower 1, outside the concrete wall of the sectors 12.

The invention is not limited to the disclosed embodiment and various modifications can be brought to the latter without departing from the scope of the invention, as defined by the appended claims.

For example, the tensioning tendons may extend through passages internal to the sectors.

The segments may be of a ring shape other than circular, for example polygonal, in particular hexagonal.

## Claims

1. A wind turbine tower comprising a plurality of annular segments (10) axially aligned with each other, at least one of the annular segments (10) comprising a plurality of assembled sectors (12) made of precast concrete, adjacent sectors (12) of this segment (10) being assembled by clamping devices (30) and each segment comprising at the interface of adjacent sectors shear keys (15) cast with the sectors, the sectors (12) comprising recesses (16) for accommodating the shear keys (15), **characterised in that** these recesses (16) opening out onto the intrados (134) of the sectors in the assembled state.

2. The tower of claim 1, each sector (12) comprising axial ribs (17, 18) protruding inwardly adjacent the lateral end faces (13, 14) of the sector, the ribs preferably having a triangular cross section.

3. The tower of claim 2, the clamping devices comprising bolts (30) that extend through a corresponding rib (18).

4. The tower of any one of claims 1 to 3, the sectors comprising sockets (31) for receiving bolts (30) of the clamping devices, the sockets (31) being integrated into the sectors (12) during casting thereof.

5. The tower according to any one of claims 1 to 4, each sector (12) comprising at least one axial bore (40) extending from each axial end (35) of the sector along at least part of the height of the sector, at least one of the bores (40) preferably opening out into a recess (41) formed on the internal surface of the sector.

6. The tower of any one of claims 1 to 5, at least some of the sectors of at least one segment comprising windows (50) opening out on the extrados of the segment, for hoisting the segment or anchoring of a machine used for elevating the tower.

7. The tower of any one of claims 1 to 6, comprising biconical centering pins (46) engaged between the sectors of two adjacent segments (10).

8. The tower of any one of claims 1 to 7, each sector having a height and a width less than 4.5m and 8m respectively each.

9. A method for the production of sectors (12) of a tower as defined in any one of the preceding claims, comprising transferring a mold of such a sector between different workstations, including
- A workstation (60) where the mold of the sector is open,
- a workstation (61) where a cast sector is extracted from the mold,
- a workstation (62) where the mold is cleaned,
- a workstation (62) where rebar is positioned in the mold,
- a workstation (62) where the mold is closed,
- a workstation (63) where concrete is injected in the mold,
- a workstation (65) where concrete is let set in the mold.

10. The method of claim 9, the mold being machined so as to provide manufacturing tolerance not greater than 5 mm, better 3mm, even better 1mm or 0,5 mm, on faces (13, 14, 35) of a sector intended to contact other sectors.

11. The method of claim 9 or 10, the mold having a surface configured for casting the extrados (55) that is oriented so that the extrados of the sector faces downward when the sector is cast.

12. A method for constructing a tower as defined in any one of claims 1 to 8, comprising transporting the sectors from a plant where the sectors are made to a construction site for the tower, the transportation being performed with regular or low bed trucks and more than one sector (12) per truck, assembling the sectors to form the segments, and then assembling the segments (10).

13. The method of claim 12, the sectors (12) of a segment (10) being assembled on a rotating platform (70), each sector being carried during assembly by an end of a manipulating arm (85) of a wheeled vehicle (106), without hoisting.

14. The method of claim 13, the rotating platform comprising a track for transfer of a completed segment out of the platform, jacks (86) for lifting the segment to position thereunder transportation members, and at least one arm (78) to hold a first sector on the platform while awaiting other sectors to be assembled thereon.

## Patentansprüche

1. Windturbinenturm mit einer Vielzahl von ringförmigen Segmenten (10), die axial zueinander ausgerichtet sind, wobei mindestens eines der ringförmigen Segmente (10) eine Vielzahl von zusammengesetzten Sektoren (12) aus vorgegossenem Beton aufweist, wobei benachbarte Sektoren (12) dieses Segments (10) durch Klemmvorrichtungen (30) zusammengebaut werden und jedes Segment an der Schnittstelle benachbarter Sektoren mit den Sektoren gegossene Schubverzahnungen (15) umfasst, wobei die Sektoren (12) Aussparungen (16) zur Aufnahme der Schubverzahnungen (15) umfassen, **dadurch gekennzeichnet, dass** diese Aussparungen (16) im zusammengebauten Zustand in die Leibungen (134) der Sektoren münden.

2. Turm gemäß Anspruch 1, wobei jeder Sektor (12) axiale Rippen (17, 18) umfasst, die neben den seitlichen Endflächen (13, 14) des Sektors nach innen vorstehen, wobei die Rippen vorzugsweise einen dreieckigen Querschnitt aufweisen.

3. Turm gemäß Anspruch 2, wobei die Klemmvorrichtungen Bolzen (30) umfassen, die sich durch eine entsprechende Rippe (18) erstrecken.

4. Turm gemäß einem der Ansprüche 1 bis 3, wobei die Sektoren Buchsen (31) zur Aufnahme von Bolzen (30) der Klemmvorrichtungen aufweisen, wobei die Buchsen (31) beim Gießen der Sektoren (12) in diese integriert werden.

5. Turm gemäß einem der Ansprüche 1 bis 4, wobei jeder Sektor (12) mindestens eine axiale Bohrung (40) aufweist, die sich von jedem axialen Ende (35) des Sektors entlang mindestens eines Teils der Höhe des Sektors erstreckt, wobei mindestens eine der Bohrungen (40) vorzugsweise in eine Aussparung (41) mündet, die an der Innenfläche des Sektors ausgebildet ist.

6. Turm gemäß einem der Ansprüche 1 bis 5, wobei mindestens einige der Sektoren mindestens eines Segments Fenster (50) aufweisen, die sich an den Außenbögen des Segments öffnen, um das Segment anzuheben oder eine Maschine zu verankern, die zum Anheben des Turms verwendet wird.

7. Turm gemäß einem der Ansprüche 1 bis 6, umfassend bikonische Zentrierstifte (46), die zwischen den Sektoren zweier benachbarter Segmente (10) eingreifen.

8. Turm gemäß einem der Ansprüche 1 bis 7, wobei jeder Sektor eine Höhe und eine Breite von weniger als 4,5 bzw. 8 m aufweist.

9. Verfahren zur Herstellung von Sektoren (12) eines Turms gemäß einem der vorhergehenden Ansprüche, umfassend das Überführen einer Form eines solchen Sektors zwischen verschiedenen Arbeitsstationen, einschließlich:
- einer Arbeitsstation (60), an der die Form des Sektors offen ist,
- einer Arbeitsstation (61), an der ein gegossener Sektor aus der Form entnommen wird,
- eine Arbeitsstation (62), an der die Form gereinigt wird,
- eine Arbeitsstation (62), an der eine Bewehrung in der Form positioniert wird,
- eine Arbeitsstation (62), an der die Form geschlossen wird,
- eine Arbeitsstation (63), an der Beton in die Form gespritzt wird,
- eine Arbeitsstation (65), an der Beton in der Form abbinden gelassen wird.

10. Verfahren gemäß Anspruch 9, wobei die Form so bearbeitet wird, dass die Fertigungstoleranz auf den Flächen (13, 14, 35) eines Sektors, der mit anderen Sektoren in Kontakt kommen soll, nicht mehr als 5 mm, besser 3 mm, noch besser 1 mm oder 0,5 mm beträgt.

11. Verfahren gemäß Anspruch 9 oder 10, wobei die Form eine Oberfläche aufweist, die zum Gießen der Außenbögen (55) konfiguriert ist, die so ausgerichtet ist, dass der Außenbogen des Sektors nach unten zeigt, wenn der Sektor gegossen wird.

12. Verfahren zum Bau eines Turms gemäß einem der Ansprüche 1 bis 8, umfassend das Transportieren der Sektoren von einer Anlage, in der die Sektoren hergestellt werden, zu einer Baustelle für den Turm, wobei das Transportieren mit normalen oder Tiefladern und mehr als einem Sektor (12) pro LKW durchgeführt wird, das Zusammensetzen der Sektoren zum Bilden der Segmente und dann das Montieren der Segmente (10).

13. Verfahren gemäß Anspruch 12, wobei die Sektoren (12) eines Segments (10) auf einer Drehplattform (70) zusammengebaut werden, wobei jeder Sektor während des Zusammenbaus durch ein Ende eines Manipulatorarms (85) eines Radfahrzeugs (106) getragen wird, ohne angehoben zu werden.

14. Verfahren gemäß Anspruch 13, wobei die Drehplattform eine Schiene für das Transportieren eines fertigen Segments aus der Plattform heraus, Hebevorrichtungen (86) zum Anheben des Segments, um es unter Transportelementen zu positionieren, und mindestens einen Arm (78) umfasst, um einen ersten Sektor auf der Plattform zu halten, während darauf gewartet wird, dass andere Sektoren darauf zusammengebaut werden.

## Revendications

1. Tour d'éolienne comprenant une pluralité de segments annulaires (10) alignés axialement les uns sur les autres, au moins un des segments annulaires (10) comprenant une pluralité de secteurs assemblés (12) réalisés en béton préfabriqué, des secteurs adjacents (12) de ce segment (10) étant assemblés par des dispositifs de serrage (30) et chaque segment comprenant au niveau de l'interface de secteurs adjacents des clés de cisaillement (15) coulées avec les secteurs, les secteurs (12) comprenant des évidements (16) pour recevoir les clés de cisaillement (15), **caractérisée en ce que** ces évidements (16) débouchent sur l'intrados (134) des secteurs à l'état assemblé.

2. Tour selon la revendication 1, chaque secteur (12) comprenant des nervures axiales (17, 18) faisant saillie vers l'intérieur de façon adjacente aux faces d'extrémité latérales (13, 14) du secteur, les nervures ayant de préférence une coupe transversale triangulaire.

3. Tour selon la revendication 2, les dispositifs de serrage comprenant des boulons (30) qui s'étendent à travers une nervure correspondante (18).

4. Tour selon l'une quelconque des revendications 1 à 3, les secteurs comprenant des douilles (31) pour recevoir des boulons (30) des dispositifs de serrage, les douilles (31) étant intégrées dans les secteurs lors du coulage de ceux-ci.

5. Tour selon l'une quelconque des revendications 1 à 4, chaque secteur (12) comprenant au moins un alésage axial (40) s'étendant depuis chaque extrémité axiale (35) du secteur le long d'au moins une partie de la hauteur du secteur, au moins un des alésages (40) débouchant de préférence dans un évidement (41) formé sur la surface interne du secteur.

6. Tour selon l'une quelconque des revendications 1 à 5, au moins certains des secteurs d'au moins un segment comprenant des fenêtres (50) débouchant sur l'extrados du segment, pour le levage du segment ou l'ancrage d'une machine utilisée pour l'élévation de la tour.

7. Tour selon l'une quelconque des revendications 1 à 6, comprenant des broches de centrage biconiques (46) en prise entre les secteurs de deux segments adjacents (10).

8. Tour selon l'une quelconque des revendications 1 à 7, chaque secteur ayant une hauteur et une largeur inférieures à 4,5 m et 8 m respectivement.

9. Procédé pour la production de secteurs (12) d'une tour selon l'une quelconque des revendications précédentes, comprenant le transfert d'un moule d'un tel secteur entre différents postes de travail, y compris :
- un poste de travail (60) où le moule du secteur est ouvert,
- un poste de travail (61) où un secteur coulé est extrait du moule,
- un poste de travail (62) où le moule est nettoyé,
- un poste de travail (62) où une barre d'armature est positionnée dans le moule,
- un poste de travail (62) où le moule est fermé,
- un poste de travail (63) où du béton est injecté dans le moule,
- un poste de travail (65) où on laisse le béton prendre dans le moule.

10. Procédé selon la revendication 9, le moule étant usiné de façon à fournir une tolérance de fabrication inférieure ou égale à 5 mm, mieux, à 3 mm, encore mieux à 1 mm ou 0,5 mm, sur les faces (13, 14, 35) d'un secteur destiné à entrer en contact avec d'autres secteurs.

11. Procédé selon la revendication 9 ou 10, le moule ayant une surface configurée pour couler l'extrados (55) qui est orientée de sorte que l'extrados du secteur soit tourné vers le bas lorsque le secteur est coulé.

12. Procédé pour construire une tour selon l'une quelconque des revendications 1 à 8, comprenant le transport des secteurs depuis une usine où les secteurs sont fabriqués jusqu'à un chantier de construction de la tour, le transport étant effectué avec des camions ordinaires ou à plateau surbaissé et plus d'un secteur (12) par camion, l'assemblage des secteurs pour former les segments, puis l'assemblage des segments (10) .

13. Procédé selon la revendication 12, les secteurs (12) d'un segment (10) étant assemblés sur une plate-forme rotative (70), chaque secteur étant transporté pendant l'assemblage par une extrémité d'un bras de manipulation (85) d'un véhicule à roues (106), sans levage.

14. Procédé selon la revendication 13, la plate-forme rotative comprenant une piste pour le transfert d'un segment achevé hors de la plate-forme, des vérins (86) pour soulever le segment afin de positionner sous celui-ci des éléments de transport, et au moins un bras (78) pour maintenir un premier secteur sur la plate-forme en attendant que d'autres secteurs soient assemblés sur celle-ci.
